# NOUVEAU FASCICULE DE BREVET EUROPEEN

(11) **EP 0 207 492 B2**
(45) Date de publication et mention de la décision concernant l'opposition: **17.04.1996**
(45) Mention de la délivrance du brevet: 17.03.1993
(21) Numéro de dépôt: 86108929.0
(22) Date de dépôt: 01.07.1986
(51) Int. Cl.: G07B 17/02, G07F 7/02, G07F 7/08, G07F 7/10

(54) **Procédé de contrôle pour machines à affranchir**
Verfahren zur Steuerung von Frankiermaschinen
Postage meter control method

(30) Priorité: 02.07.1985 FR 8510082
(43) Date de publication de la demande: 07.01.1987
(73) Titulaire: NEOPOST INDUSTRIE, F-92220 Bagneux (FR)
(72) Inventeur: Vermesse, Bernard, F-94240 l'Hay Les Roses (FR)
(74) Mandataire: Weinmiller, Jürgen

(56) Documents cités:
- FR-A- 2 503 423
- GB-A- 2 032 224
- GB-A- 2 066 736
- GB-A- 2 077 189
- US-A- 3 859 634
- US-A- 4 218 011
- US-A- 4 256 955
- US-A- 4 258 252
- US-A- 4 352 011
- US-A- 4 367 402
- US-A- 4 436 992
- US-A- 4 453 074
- US-A- 4 501 485
- IEEE SPECTRUM, no. 2, février 1984, pages 43-49, IEEE, New York, US; S.B. WEINSTEIN: "Smart credit cards: the answer to cashless shopping"

## Description

La présente invention concerne un procédé de contrôle pour machine à affranchir.

De manière connue les machines à affranchir s sont conçues pour permettre à de gros utilisateurs d'imprimer sur le courrier postal à transmettre les timbres correspondants aux taxes à payer par l'envoyeur pour que ce courrier arrive sans frais supplémentaires aux destinataires. Ces machines d'affranchissement assurent une comptabilisation des valeurs d'affranchissement correspondant aux timbres imprimés, leur exploitation est donc très fortement surveillée, car leurs fortes possibilités de débit pourraient entraîner des pertes de rentrées financiaires très importantes pour l'organisme chargé de percevoir les taxes, en cas d'utilisation irrégulière.

Pour ce faire on utilise outre les systèmes en ligne tels que celui décrit dans le document GB-A-2032224, deux procédés concurrents basés l'un sur le pré-paiement des valeurs à affranchir et l'autre sur le post-paiement. Dans le premier cas. classiquement, les machines à affranchir se bloquent lorsque les valeurs comptabilisées atteignent 2 la valeur payée, ce qui oblige les utilisateurs à réapprovisionner régulièrement les machines, en fonction de leur utilisation, sous peine d'interruption. Dans une forme de réalisation connue, des compteurs transportables assurent le rôle d'instruments de contrôle et ils doivent être enlevés des machines et transportés par l'utilisateur pour leur rechargement par l'Administration postale. Le document GB-A-2066736 décrit une solution où des cartes magnétiques ou électroniques sont mises en oeuvre à la place des compteurs transportables pour le réapprovisionnement des machines dans un procédé conforme au préambule de la revendication 1.

Dans le second cas, des relevés cycliques détaillés des timbrages effectués sont établis par l'utilisateur pour chaque machine, ils doivent immédiatement être transmis à l'Admistration postale, sous peine de sanctions contraignantes et des contrôles directs sur les organes de comptage des machines peuvent être effectués à tout moment par les agents de cette Administration postale.

Un tel procédé présente notamment l'inconvénient d'exiger un travail important de la part de l'utilisateur et de l'Administration postale pour effectuer, comptabiliser et contrôler les relevés, il entraîne pratiquement l'usage de procédures lourdes et grandes consommatrices de temps.

L'un et l'autre des deux procédés évoqués ci-dessus sont donc susceptibles d'être amélioré à l'avantage, tant de l'Administration postale que des utilisateurs par remplacement de procédures lourdes, peu commodes et exigeant une importante intervention humaine, notamment pour la comptabilisation et la vérification, par des procédures beaucoup plus simples n'exigeant qu'une intervention humaine limitée, tout en évitant la mise en place d'équipements téléphoniques de liaison.

En ce but, l'invention propose un procédé de contrôle tel que défini par la revendication 1 ci-jointe.

L'invention, ses caractéristiques et ses avantages sont précisés dans la description qui suit, en liaison avec les figures répertoriées ci-dessous.

La figure 1 présente le schéma d'un système de contrôle selon l'invention.

La figure 2 représente partiellement le contenu de la mémoire d'une carte à mémoire et processeur.

La figure 3 représente partiellement le contenu de la mémoire d'une carte, dite de poste.

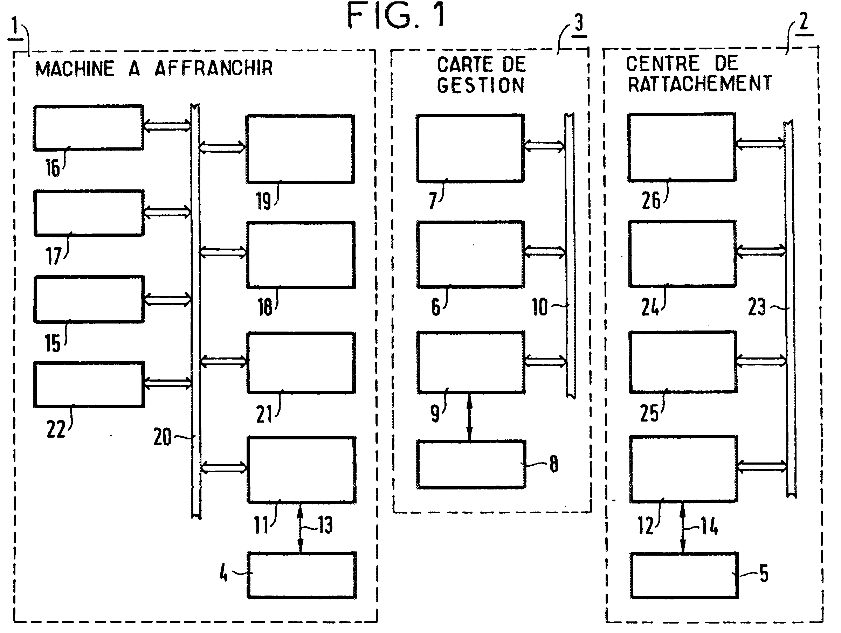

Le système de contrôle présenté figure 1 est destiné à permettre la gestion d'un parc de machines à affranchir 1, dont une seule est ici schématisée.

Ce système de contrôle comporte en ce but au moins un centre de rattachement 2 par l'intermédiaire duquel sont transmises les directives, régissant le fonctionnement des machines, et sont reçues les informations d'exploitation, émanant de ces machines, en vue de leur traitement.

Les machines à affranchir 1 et le ou les centres de rattachement 2 communiquent leurs informations d'exploitation ou leurs directives sous forme numérique par l'intermédiaire de cartes de gestion 3, telle celle présentée en figure 1, et sont respectivement dotés en ce but de terminaux d'écriture-lecture 4 ou 5 dans lesquels on vient alternativement placer les cartes de gestion 3.

Chaque machine à affranchir 1 n'assure sa fonction d'affranchissement qu'en présence d'une carte de gestion 3P, dite de poste, dans son terminal d'écriture-lecture 4, cette carte agissant alors comme une clé individuelle propre à cette machine.

Les cartes de gestion 3 sont en fait des cartes dites à mémoire où à microcircuits, de type carte bancaire, qui incorporent un microprocesseur 6 et une mémoire 7, généralement ineffaçable, dans un contenant dont les dimensions sont celles des cartes de crédit ou de paiement usuelles.

Dans l'exemple choisi ces cartes de gestion 3 sont des cartes de type CP8 définies notamment dans les documents ISO/DP 7810 et ISO/TC97/SG17/WG4 N52 et N53, seules leurs caractéristiques ayant un lien direct avec l'invention seront donc rappelées ici.

Il en sera de même pour les terminaux d'écriture-lecture 4 ou 5 qui sont connus en eux-mêmes, les terminaux pris en considération étant par exemple du modèle TLP124 de la société BULL.

Chaque carte de gestion 3 dispose d'un connecteur externe 8 relié via un circuit d'entrée-sortie 9 aux liaisons 10 unissant le processeur 6 à la mémoire 7 pour leurs échanges de données binaires.

Ce connecteur 8 est doté de plots affleurant la surface d'une des grandes faces de la carte de gestion 3 qui le comporte, en vue de permettre une liaison électrique directe de ces plots avec des contacts correspondants d'un terminal d'écriture-lecture 4 ou 5 dans lequel la carte de gestion est introduite de manière appropriée. Classiquement le connecteur 8 comporte huit plots permettant notamment l'établissement d'une liaison série d'entrée-sortie de données binaires entre terminal et carte, la réception de signaux d'horloge et de signaux de commande par la carte, ainsi que l'alimentation en énergie de cette dernière.

L'écriture de données binaires en mémoire 7 de carte de gestion 3 s'effectue par voie électrique et sous forme irréversible via le connecteur 8 et par l'intermédiaire des terminaux d'écriture-lecture, toute écriture ou lecture étant contrôlée par le processeur 6 concerné qui est apte de par sa programmation à autoriser ou interdire ces opérations et qui peut éventuellement invalider la carte.

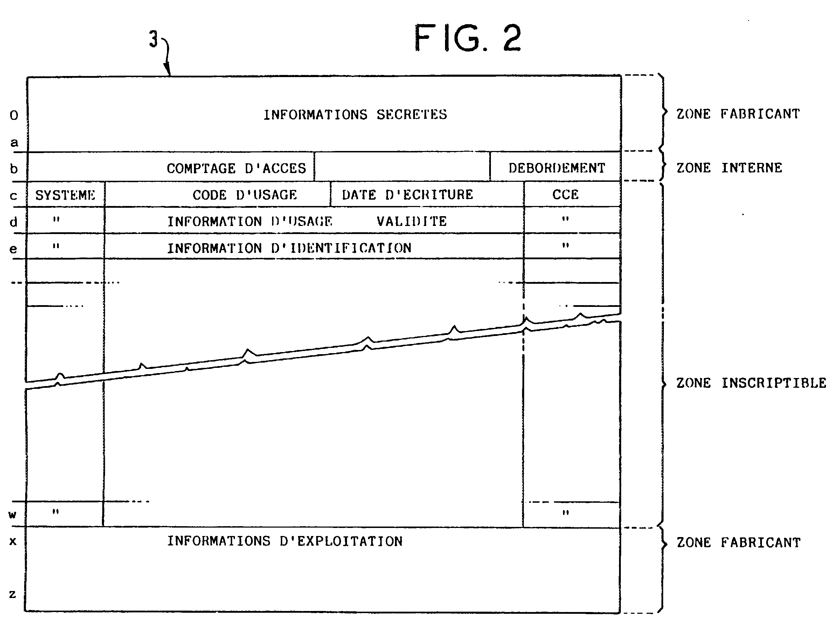

De manière connue les cartes de gestion 3, du type évoqué ci-dessus, comportent une mémoire 7 divisée en zones ayant des modes d'accès différents, comme le résume la figure 2.

La mémoire 7 d'une carte de gestion 3 permet de mémoriser un nombre déterminé de bits répartis classiquement en un certain nombre de mots de même longueur qui sont individuellement adressables, tous les bits initialement positionnés à l'identique ne sont susceptibles d'être changés qu'une seule fois de position.

Une première zone de mémoire, comportant les mots successifs d'adresses "O" à "a" sur la figure 2, est réservée, dès la fabrication, pour l'inscription de données destinées à être utilisées par le microprocesseur 6 seul, qui interdit tout accès tant en lecture qu'en écriture à cette zone après fabrication. Parmi les informations susceptibles de figurer dans cette zone on trouve notamment les codes numériques constituant les clefs d'accès, dits d'émetteur et de machine, permettant au centre de rattachement et à une machine à affranchir d'exploiter la carte ; on y trouve également l'algorithme de vérification de clé.

Une seconde zone de mémoire 7 dite zone d'accès et ici d'adresse "b" permet de comptabiliser distinctivement les tentatives d'accès réussies ou refusées à la mémoire de carte, via un terminal d'écriture-lecture 4 ou 5. C'est notamment à partir des données contenues dans cette zone d'accès que, le processeur 6 est apte à invalider la carte, d'une part après un nombre déterminé de tentatives d'accès successives, échouées, par exemple après trois tentatives successives échouées à partir d'un terminal 4 de machine, d'autre part après exploitation du nombre maximal de tentatives d'accès permis par cette carte, une information sur ce sujet étant classiquement transmise à l'utilisateur à l'occasion des derniers accès autorisés.

Une troisième zone de mémoire 7, préférablement située en fin de mémoire est réservée à des informations d'exploitation inscrites à la fabrication et susceptibles d'être lues par les terminaux d'écriture-lecture 4, 5.

Parmi les informations dites descriptives contenues dans cette troisième zone de mémoire 7, dont les adresses vont de "x" à "z" sur la figure 2, on trouve notamment les adresses des premiers mots des différentes zones de mémoire, deux indications définissant les procédures d'accès à la zone dite inscriptible définie plus loin, des indications de verrouillage susceptibles d'être introduites à différents stades d'inscription de données sur la carte, notamment en fin de fabrication, des numéros d'identification de la carte de gestion concernée, de son fabricant et de l'application prévue, soit ici l'affranchissement postal. Classiquement la plupart des informations descriptives sont suivies d'un code correcteur d'erreur permettant de contrôler leur exactitude.

Une quatrième zone de mémoire 7 constitue la zone inscriptible par les terminaux d'écriture-lecture 4 et 5 des machines à affranchir 1 et des centres de rattachement 2. C'est dans cette quatrième zone dont les adresses vont de "c" à "w" sur la figure 2 que sont inscrites chronologiquement en des mots d'adresses successives les données binaires alternativement produites par un centre de rattachement 2 à destination d'une machine à affranchir 1 qu'il contrôle et par cette machine à destination de ce centre.

Chaque mot défini par une adresse spécifique en zone inscriptible débute par un groupe de bits, dits de système, dont le premier, dit de verrouillage, donne l'état du mot, c'est-à-dire précise si ce mot a été écrit de manière non modifiable sur la carte qui le comporte ou si son emplacement est disponible. Un second de ces bits de système précise le type de clé d'accès utilisé pour écrire le mot qui le comporte sur une carte en indiquant par sa valeur binaire si le terminal d'écriture-lecture qui l'a écrit a utilisé la clé d'accès d'émetteur, ce qui implique que l'écriture est due au centre de rattachement, ou si ce terminal a utilisé la clé d'accès machine, ce qui implique que l'écriture est due à la machine à affranchir à laquelle est affectée la carte portant ce mot.

Ceci est bien entendu obtenu par comparaison par le microprocesseur 6 concerné du code d'accès, fourni par le terminal d'écriture-lecture où est introduite la carte d'accès 1 qui comporte ce processeur 6, avec les codes de clé d'accès machine et émetteur contenus en première zone de mémoire 7 de ladite carte d'accès 1.

D'autres caractéristiques des mots susceptibles d'être écrits en zone mémoire inscriptible sont précisées ultérieurement à la suite de la description relative au système de contrôle proprement dit tel que présenté en figure 1.

Comme indiqué plus haut les terminaux d'écriture-lecture 4 et 5 des machines à affranchir 1 et centres de rattachement 2 sont destinés à permettre l'alimentation en énergie des cartes de gestion et notamment de leurs processeurs, ainsi que l'échange d'informations sous forme de données binaires par le seul intermédiaire desdites cartes. De ce fait chaque terminal d'écriture-lecture 4 ou 5 est relié à la logique électronique de commande ou de gestion de la machine à affranchir 1 ou du centre de rattachement 2 qu'il dessert par l'intermédiaire d'un circuit d'entrée-sortie 11 ou 12, via une liaison bidirectionnelle de transmission 13 ou 14, qui est par exemple de type V24 connu.

Chaque machine à affranchir 1 est de type électronique usuel et comporte notamment une unité ou tête d'impression 15 chargée d'assurer le timbrage du courrier postal à la demande. Cette unité d'impression 15, tout à fait classique, inscrit notamment les dates et lieux d'expédition du courrier et les valeurs d'affranchissement prises en compte. Les données permettant d'inscrire ces indications sont classiquement introduites par l'intermédiaire d'un clavier 16 mis à disposition de l'utilisateur. Un afficheur 17 est également inclus dans la machine à affranchir, il permet de fournir à l'utilisateur, par exemple sur un écran, un certain nombre d'informations utiles, notamment le résultat de ses manoeuvres, les choix susceptibles d'être effectués au cours d'un processus spécifique ou encore, les informations mémorisées sous forme binaire dans la partie lisible de la mémoire 7 de la carte de gestion 3 insérée à cet instant dans le dispositif d'écriture-lecture 4 de la machine à affranchir 1 qui le comporte.

D'autres dispositifs classiques, relatifs notamment au transfert, à la pesée ou au positionnement du courrier à affranchir, ne sont pas précisés ici dans la mesure où bien que nécessaires au fonctionnement de la machine, ils n'ont pas en fait de lien direct avec la présente invention.

Par contre il est nécessaire de mentionner que les machines à affranchir contrôlées selon l'invention, comportent chacune une logique électronique de commande organisée autour d'au moins un processeur 18. Ce processeur assure le fonctionnement de la machine en fonction du programme emmagasiné dans ses mémoires 19, des informations fournies par un centre de rattachement 2 via la carte de gestion 3 placée dans le terminal d'écriture-lecture 4 de machine, et des indications fabulées par l'utilisateur au moyen du clavier 16. Ce processeur 18 gère aussi les échanges d'information avec la carte de gestion 3 placée dans le dispositif d'écriture-lecture 4 et fournit notamment, à partir d'un oscillateur associé non figuré, les signaux d'horloge nécessaires au fonctionnement du microprocesseur 6 de la carte.

Classiquement le processeur 18 est relié à ses mémoires 19 et aux éléments 11, 15, 16, 17, de la machine à affranchir qui le comporte, par un bus multiple 20 comprenant au moins un bus de données, un bus de commande et un bus d'adresse distribués selon les besoins et non figurés.

Les mémoires 19, classiquement divisées en mémoires mortes et en mémoires vives, conservent de manière respectivement permanente ou temporaire, les, programmes mis en oeuvre par la machine et les données qu'utilisent ou produisent ces programmes.

Une sauvegarde en mémoire vive est classiquement assurée pour conserver les données susceptibles d'évolution dont la perte peut être dommageable.

Seront ainsi sauvegardées les données relatives à la définition des différents compteurs d'affranchissement de la machine à affranchir qui sont fournies par le centre de rattachement 2, via la carte de gestion 3 affectée à cette machine à affranchir, et qui sont précisées plus loin. De même sont sauvegardées, dans des conditions évoquées plus loin, les données correspondant au contenu desdits compteurs d'affranchissement entre deux acquittements successifs.

On associe un équipement dateur 21 à chaque machine à affranchir 1 pour fournir les indications de calendrier nécessaires à la datation des relevés systématiques que l'on vient d'une part mémoriser en zone secourue de mémoire 19, d'autre part en mémoire 7 de carte de gestion 1. Cet équipement dateur 21 de type électronique classique, tel le modèle MM 58274 de la société National Semiconductor Corporation, bénéficie bien entendu d'une alimentation secourue, lui assurant un fonctionnement ininterrompu, en particulier lors des arrêts de la machine à affranchir 1 qui le comporte.

On associe au moins un équipement identifieur à chaque machine à affranchir 1 pour lui permettre de fournir systématiquement et sans intervention de l'utilisateur des données d'identification caractérisant cette machine vis-à-vis des cartes de gestion 3 introduites dans son dispositif d'écriture-lecture 4.

L'équipement identifieur 22 et l'équipement dateur 21, sont classiquement reliés au bus multiple 20 de manière à fournir, sous forme d'informations codées binaires et à la demande du processeur 18, les indications souhaitées qu'ils sont susceptibles de fournir.

Il est connu que, dans une forme de réalisation classique, les machines à affranchir 1 se divisent mécaniquement en deux parties dont l'une comporte notamment l'unité d'impression 15, le clavier 16 et l'afficheur 17 et forme une tête d'impression amovible que l'on vient monter sur l'autre partie qui forme une base et qui comporte notamment les dispositifs de transfert et de pesée évoqués plus haut, ainsi que l'alimentation en énergie.

Dans un tel cas il y a classiquement duplication de certains éléments constitutifs, tels les mémoires 19, le processeur 6, l'équipement identifieur 22, ceci ne sera toutefois pas précisé plus avant dans la mesure où la structure générale de ces machines d'affranchissement au point de vue contrôle n'est pas foncièrement différentes de celle décrite en liaison avec la figure 1, sauf sur certains points mineurs évoqués ci-dessous.

En particulier, dans cette forme de réalisation, chaque tête d'affranchissement possède, un numéro individuel d'identification qu'elle fournit par son équipement identifieur, à chaque mise sous-tension, au processeur de la base sur laquelle on la monte, celle-ci étant elle-même dotée d'un équipement identifieur spécifique, par exemple de type logique programmée ou cablée ; tout changement de tête d'impression entraîne bien entendu une mise hors-tension préalable, du fait de la séparation alors réalisée entre tête et base.

De même c'est l'oscillateur non figuré du processeur inclus dans la tête qui alimente en signaux d'horloge le processeur de la base qui en est l'esclave.

Par contre la mémoire vive sauvegardée est préférablement incluse dans chaque tête pour la conservation des données contenues dans la machine qui sont susceptibles d'évolution et dont la perte est dommageable.

Le centre de rattachement 2 schématisé figure 1 comporte un ou plusieurs terminaux d'écriture-lecture 5 reliés à autant de circuits d'entrée-sortie 12, chargés, comme on l'a vu, de la nécessaire adaptation des informations binaires échangées avec les cartes de gestion 3, via le ou lesdits terminaux.

Ces circuits d'entrée-sortie 12 reçoivent et émettent les informations échangées avec les terminaux d'écriture-lecture, via des liaisons par exemple de type V24, comme indiqués plus haut ; ils assurent le rôle d'interface vis-à-vis du bus de données inclus dans un bus multiple 23 qui les relient à la logique de gestion du centre de rattachement 2 les comportant.

Cette logique de gestion est classiquement organisée autour d'au moins un processeur 24 associé à des mémoires 25 et à un usuel ensemble d'équipements périphériques d'aide à la gestion 26 comprenant si besoin est des processeurs spécialisés, des imprimantes, des appareils de visualisations...

Ces différents éléments du centre de rattachement ne sont pas décrits plus avant dans la mesure où ils sont tout à fait classiques dans les centres de gestion et n'ont qu'un rapport indirect avec l'invention. Il en est de même des programmes nécessaires au fonctionnement tant du centre que des machines et des cartes, dans la mesure où ces programmes classiques n'apportent rien ici à la compréhension et relèvent de techniques classiques sans rapport direct avec l'invention.

Le fabricant de cartes de gestion 3 fournit les cartes dans l'état vierge évoqué plus haut et ce sont les opérateurs du centre de rattachement qui complètent le contenu des cartes en fonction des machines à affranchir 1 auxquelles elles sont destinées et de l'utilisation prévue, de manière à les rendre opérationnelles.

Pour se faire chaque carte de gestion 3 est initialement introduite dans un terminal d'écriture-lecture 5 du centre de rattachement 2 afin d'être complétée par écriture d'information de personnalisation en zone inscriptible, informations qui comme on l'a vu ne sont ensuite plus modifiables.

Pour effectuer de telles écritures le centre de rattachement 2 fournit le code de clé émetteur au dispositif d'écriture-lecture 5 dans lequel la carte de gestion 3 à personnaliser est introduite, de manière que celui-ci la transmette au processeur 6 de cette carte. Ce dernier autorise ou non l'accès en écriture à la zone inscriptible de la mémoire 7, de cette carte, suivant qu'il reconnait ou non ladite clé émetteur par comparaison avec celle mémorisée dans la zone d'adresse "O" à "a" de cette mémoire 7.

La première opération d'écriture faite par le centre de rattachement dans une carte de gestion 3 s'effectue à l'adresse "c" telle que présentée en figure 2 et prévoit l'écriture des bits de système du mot d'adresse "c" et notamment du bit de verrouillage V destiné à interdire toute modification du mot concerné postérieurement à l'opération d'écriture en cours, c'est-à-dire à partir du moment ou ce bit V prend la valeur zéro.

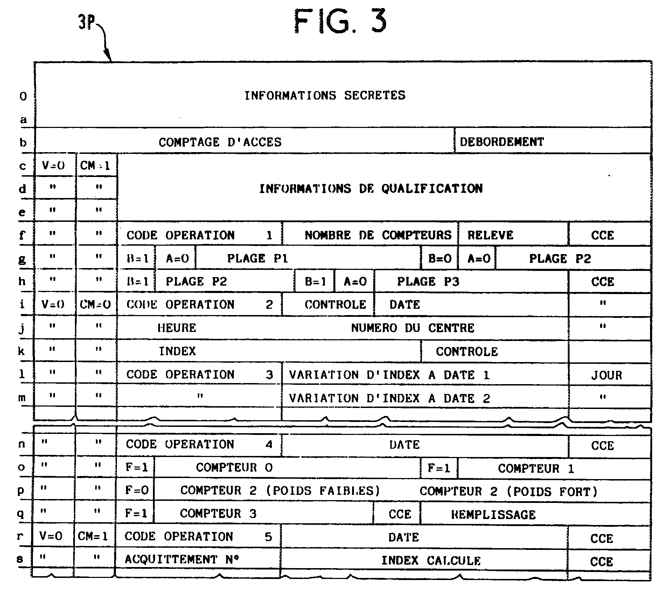

Un second bit de système CM (figure 3), fonction du scripteur c'est-à-dire de la machine à affranchir ou du centre de rattachement, est également prévu, il n'est pas modifié en cas d'écriture par le centre.

La première opération d'écriture prévoit aussi l'inscription d'une indication d'usage sous forme par exemple d'un mot de sept bits disposés à la suite des bits de système dans l'emplacement mémoire d'adresse "c". Cette indication précise l'usage préférablement unique auquel est affecté la carte de gestion 3 qui la porte. Cette indication précise notamment si la carte de gestion 3 est :
- une carte 3P, dite de poste, chargée spécifiquement d'assurer les échanges d'information entre une machine à affranchir 1 unique et son centre de rattachement 2 ;
- une carte 3A d'agent de contrôle permettant au personnel du centre de rattachement d'effectuer des contrôles sur les machines :
- une carte 3T de technicien de maintenance ;
- une carte clé 3C, auxiliaire ou maître, permettant à l'exploitant un usage et une répercussion des frais d'affranchissement entre plusieurs utilisateurs d'une même machine ;
- d'autres cartes auxiliaires à usage spécifique, telles des cartes de test ou de prépaiement, etc.....

L'opération d'écriture en emplacement mémoire 7 d'adresse "c", implique aussi l'inscription à cet emplacement et sous forme codée de la date d'écriture de l'indication d'usage qu'elle suit et d'un code correcteur d'erreur CCE permettant de vérifier par calcul à toute lecture si l'ensemble des informations écrites à l'emplacement d'adresse "c" parait correct.

La première opération d'écriture par le centre de rattachement 2 en zone inscriptible de mémoire 7 d'une carte de gestion prévoit également une écriture à l'adresse "d" qui suit immédiatement l'adresse "c" pour préciser d'une part une information liée à l'usage défini par l'indication d'usage présente à l'adresse "c" d'autre part une indication de validité de la carte précisant notamment la date de début de validité et sa durée, un code correcteur d'erreur vient compléter le mot inscrit à l'emplacement d'adresse "d", ce mot commençant par les bits de système comme tous ceux inscrits en zone inscriptible.

A titre d'exemple, l'information liée à l'usage qui est prévue à l'emplacement d'adresse "d" en zone inscriptible de mémoire 7 est :
- une information relative à la fréquence des relevés à effectuer sur la machine à affranchir à laquelle la carte est affectée et d'autre part au blocage éventuel de cette machine en cas de non respect de conditions évoquées plus loin, si la carte est une carte de poste ;
- une information précisant le numéro de l'agent de contrôle ou du technicien auquel elle est attribuée dans les cas respectifs d'une carte d'agent de contrôle ou d'une carte de technicien de maintenance ;
- une information d'identification de l'utilisateur ou de l'exploitant et d'affectation des frais d'affranchissement dans les cas d'une carte clé auxiliaire ou d'une carte clé maître destinées respectivement l'une à se substituer à la carte de poste dans le cas d'exploitation par plusieurs utilisateurs, et l'autre à permettre la création de cartes auxiliaires par l'exploitant dans le cas d'exploitation par plusieurs utilisateurs sous la responsabilité dudit exploitant.

La première opération d'écriture par le centre de rattachement 2 en zone inscriptible de mémoire 7 d'une carte de gestion 3 prévoit aussi une série d'informations de qualification de la carte et notamment une information d'identification suivie d'un code correcteur d'erreur CCE, dans au moins le mot situé à l'emplacement d'adresse "e".

Cette information d'identification précise notamment le numéro d'identification de la machine à affranchir 1, à laquelle la carte de gestion 3 est affectée, dans le cas des cartes clés et des cartes de poste ; elle précise aussi le numéro du bureau de rattachement dans le cas des cartes de poste et des cartes d'agent de contrôle et le numéro de l'exploitant dans le cas des cartes de technicien de maintenance.

Au cours de la première écriture d'information de qualification par le centre de rattachement 2 en zone inscriptible de mémoire 7 d'une carte de poste 3P, les opérateurs du centre inscrivent aussi un certain nombre d'indications variables en fonction de l'exploitation prévue pour la machine à affranchir à laquelle la carte de poste considérée est spécifiquement affectée.

Comme on l'a vu plus haut un premier groupe d'indications est contenu à l'emplacement d'adresse "d" dans la zone réservée à l'information d'usage, elle précise la fréquence des relevés à effectuer par une carte de poste 3P sur la machine à affranchir 1 à laquelle elle est affectée et sur cette carte de poste par son centre de rattachement 2.

Dans l'exemple de réalisation proposé, cette information d'usage précise sous forme de deux messages codés l'un de trois bits et l'autre de deux bits d'une part la fréquence des relevés, dits d'index, d'autre part la fréquence des relevés, dits de poste, à faire sur la machine.

De manière connue, on appelle relevé d'index dans une machine à affranchir le relevé du compteur, qui en mémoire vive préférablement sauvegardée 19, contient la somme des affranchissements effectués par la machine ; dans un but de réduction du volume de données à mémoriser, seules les variations d'index d'un relevé à l'autre sont communiquées à la carte de poste 3P.

Ceci permet par exemple d'assurer un relevé d'index par jour, tous les deux jours, toutes les semaines, ou à date fixe au cours du mois, en cours d'exploitation, et à chaque affranchissement ou à chaque mise sous tension, en cours de test.

Les relevés, dits de poste, ont pour but de conduire l'utilisateur d'une carte de poste 3P à faire viser régulièrement cette carte par le centre de rattachement 2 contrôlant la machine à affranchir 1 qu'il utilise de manière à permettre à ce centre de rattachement de recueillir les informations inscrites en cours d'exploitation par la machine sur cette carte de poste, notamment dans un but de facturation.

Il est prévu de déclencher un blocage de la machine à affranchir par sa carte de poste 3P si la fréquence des relevés n'est pas respectée. C'est donc cette fréquence liée par exemple au volume d'affranchissement effectué par une machine, qui est précisée par le centre de rattachement dans le message de relevé de poste évoqué plus haut, cette fréquence étant par exemple mensuelle ou bimensuelle. C'est également le centre de rattachement qui décide de l'opportunité ou non du blocage de la machine à affranchir en l'absence de message d'acquittement, normalement écrit par ce centre de rattachement après lecture d'une carte de poste 3P suite à une succession de relevés effectués par l'intermédiaire de cette carte de poste 3P sur la machine à laquelle elle est affectée. Cette indication relative au blocage est inscrite dans l'emplacement d'adresse "d" comme indiqué plus haut, de manière à être reprise en compte par le processeur 18 de la machine à affranchir que cette carte de poste 3P contrôle, lorsqu'un relevé de poste n'est pas suivi en temps utile d'un message d'acquittement écrit par le centre de rattachement 2 concerné.

Au cours de la première écriture par le centre de rattachement 2 en zone inscriptible de mémoire 7 d'une carte de poste 3P, les opérateurs inscrivent également une série d'informations modulables, dites ici de personnalisation, qui forment un message généralement réparti sur plusieurs mots successifs.

Dans l'exemple de réalisation présenté, ces informations visent à définir les conditions de réalisation de relevés, dits statistiques, destinés à permettre de mieux cerner l'exploitation des machines à affranchir 1 par leurs utilisateurs.

Des compteurs, dits statistiques, sont prévus en une zone sauvegardée de la partie vive des mémoires 19 de chaque machine à affranchir 1, leur nombre, leur capacité et la fréquence de leurs relevés étant définis par les informations de personnalisation portées par la carte de poste 3P.

Le message constituant les informations de personnalisation des compteurs statistiques commence classiquement par les bits systèmes d'un premier mot d'adresse "f" (figure 3), ces bits systèmes sont suivi d'un code, dit d'opération, qui définit à quel type d'opération se rapport la suite du message ; dans l'exemple choisi, ce code d'opération nécessite quatre bits et permet donc la désignation d'au plus seize types différents d'opération. La suite du message est ici constitué par une indication du nombre de compteurs statistiques prévus en mémoires 19, ce nombre est choisi par les opérateurs du centre de rattachement 2 en fonction notamment des tarifs d'affranchissement postaux en vigueur.

Cette indication du nombre de compteurs est ici suivie par une indication dite de relevé définissant les conditions de relevé des compteurs statistiques, ces relevés étant ici pratiquement simultanés dans une machine.

Dans l'exemple de réalisation proposé, cette indication est composée d'un mot de neuf bits permettant de préciser la périodicité en jours, semaines ou mois et le jour choisi.

Le mot d'adresse "f" qui se termine classiquement par un code correcteur d'erreur est suivi par un ou plusieurs mots dont les adresses se succèdent et qui définissent chacun la mise en service ou non et la plage choisie pour les différents compteurs prévus.

Dans l'exemple de réalisation proposé les parties de message affectées aux différents compteurs statistiques se suivent sans interruption et il est prévu alternativement deux capacités de plage pour un compteur, l'une s'étend sur douze bits et l'autre sur vingt bits qui sont alors éventuellement répartis sur deux mots d'adresses successives. Chaque partie de message affectée à un compteur est précédée de deux indications d'un bit, l'une référencée A sur la figure 3, qui précise si les données qui suivent correspondent à la définition de plage d'un compteur statique actif ou à celle d'une zone non autorisée à l'affranchissement, l'autre référencée B indique si les données qui suivent correspondent à une plage de douze bits, nécessairement contenues dans le même mot, ou à une plage s'étendant au delà, les bits de poids fort étant alors situés dans l'autre partie.

Dans une forme de réalisation, un premier compteur statistique d'affranchissement de valeur zéro est systématiquement prévu, notamment pour la correction des erreurs de date d'affranchissement, ainsi qu'un dernier compteur statistique dont la plage s'étend entre la valeur maximale admise et la somme des plages couvertes jointivement par les autres compteurs l'un et l'autre n'étant pas ici inclus dans le message constituant les informations de personnalisation des compteurs statistiques ; ce message se termine par un code correcteur d'erreurs couvrant ici toutes les données comprises depuis le précédent code d'erreur enregistré sur la carte.

A partir de ce moment, la carte de poste 3P ainsi remplie est susceptible d'être sortie du dispositif d'écriture-lecture 5 du centre de rattachement 2 en vue d'être introduit dans celui de la machine à affranchir 1 à laquelle elle est affectée.

A la mise en service d'une machine à affranchir, celle-ci est classiquement vérifiée par un agent de contrôle qui la commande à l'aide de sa carte de gestion 3 spécialisée pour la mettre en un état initial. La carte de poste 3P remplie de la manière évoquée ci-dessus est introduite à la place de la carte d'agent de contrôle pour un premier échange de données dans lequel la machine reçoit les données inscrites pour elle dans la carte de poste 3P par le centre de rattachement 2, ainsi que notamment son numéro d'identification. En retour la machine fournit des informations relevées sur la carte d'agent à la carte de poste 3P et reçoit les données inscrites pour elle dans la carte de poste 3P par le centre de rattachement 2.

Le processeur 18 de la machine compare le numéro d'identification machine qu'il reçoit de la carte avec celui contenu dans la machine elle-même de manière à laisser poursuivre les opérations en cas d'identité ou à entrainer le blocage de la machine, ainsi qu'indiqué plus haut. Parallèlement le processeur 18 est apte à déclencher l'enregistrement temporaire des informations de qualification de la carte dans la partie vive de ses mémoires 19 pour ne permettre que les opérations autorisées à l'aide du type de carte introduite dans son terminal d'écriture-lecture.

Après transfert et prise en compte des données inscrites par le centre de rattachement 2 dans la carte de poste 3P à destination du processeur 18 de la machine à affranchir 1 concernée, celui-ci commande l'inscription en zone inscriptible de mémoire 7 de la carte, à la suite du dernier mot écrit, d'un message qui est composé du code d'opération, du numéro d'identification de la machine, de la date fournie par l'équipement dateur 21 préalablement mis à jour et à l'heure par l'agent de contrôle, du contenu à zéro du compteur d'index 27 et d'un message de contrôle (mots d'adresse i, j, k en figure 3).

Dans le cas d'un mot écrit par une machine à affranchir, les bits de système sont modifiés, le bit de verrouillage V prend la valeur zéro interdisant toute écriture ultérieure à l'adresse de ce mot et le second bit système CM prend la valeur zéro si la clé transmise par la machine à affranchir à la carte de poste correspond à la clé machine mémorisée dans ladite carte par le centre de rattachement ; ce bit CM, dit de clé machine, contrairement au bit de verrouillage n'est pas modifié en cas d'écriture à l'aide de la clé émetteur, c'est-à-dire par le centre de rattachement.

A chaque mise sous tension d'une machine à affranchir 1, cette dernière lit les informations contenues dans la carte de poste 3P qui lui est affectée et qui sert de clé indispensable au fonctionnement. Les informations fournies par la carte de poste 3P sont vérifiées par le processeur 18 par comparaison et/ou analyse suivant le type d'information considéré. Si aucune anomalie n'est relevée, au cours de cette phase de vérification, la mise en oeuvre du processus d'affranchissement est alors autorisée, tant que la carte de poste est présente. Les divers relevés d'index prévus sur la carte 3P s'effectuent systématiquement.

Le centre de rattachement 2 peut éventuellement annuler tout ou partie des informations en mémoire de carte, ici prévues dans les mots d'adresse f à k sur la figure 3, au cours d'une opération de relevé de poste où la carte de poste 3P est introduite dans un terminal d'écriture-lecture 5 ; il peut aussi leur substituer des informations nouvelles à la suite du dernier mot alors écrit.

A chaque relevé d'index, la machine à affranchir 1 calcule la variation existant entre la valeur présente et la valeur mémorisée lors du précédent relevé, qu'elle a conservé en mémoire, et transmet le résultat obtenu à la carte de poste 3P qui la contrôle.

A chaque relevé des compteurs statistiques, le processeur 18 de la machine à affranchir 1 transmet, à la carte de poste 3P qui le contrôle, un message comportant classiquement en un mot, ici d'adresse n, les bits systèmes V et CM, le code d'opération caractéristique des relevés des compteurs statistiques, la date complète et un code correcteur d'erreur ainsi qu'une succession d'informations s'étendant classiquement sur plusieurs mots, ici d'adresses o à q comportant chacun une indication F d'étendue et le montant affiché par le compteur concerné. L'indication F précise si le montant nécessite plus ou moins de, par exemple, 13 bits pour son inscription et doit donc être réparti ou non en deux demi-mots l'un de treize bits et l'autre de par exemple onze bits.

Le dernier montant enregistré est suivi d'un code correcteur d'erreur couvrant toutes les données binaires enregistrées depuis le précédent code correcteur d'erreur, soit celui du mot d'adresse n dans l'exemple présenté.

Après une succession de relevés d'index et de compteurs statistiques, la carte de poste 3P doit être ramenée au centre de rattachement 2, à la date prévue inscrite dans sa mémoire 7, afin de transmettre les informations qu'elle a collectées et de recevoir un message d'acquittement du centre attestant que cette transmission a été effectuée.

En ce but la carte de poste 3P est retirée de la machine à affranchir afin d'être introduite dans un terminal d'écriture-lecture 5 du centre de rattachement 2.

Le processeur 24 de ce centre effectue de manière connue en soi une lecture des informations contenues dans la mémoire 7 de la carte après avoir obtenu une autorisation du microprocesseur 6 auquel il a transmis en ce but le code émetteur qui le caractérise.

Après lecture le processeur 24 vient inscrire un message d'acquittement à la suite du dernier message de la machine à affranchir 1.

Ce message d'acquittement comporte en premier lieu, les bits systèmes V et CM le premier à zéro après écriture et l'autre de valeur un, puis un code d'opération d'acquittement et une indication de date formant un mot, ici d'adresse r, terminé par un code correcteur d'erreur.

Le message d'acquittement se poursuit par le numéro d'ordre de cet acquittement, établi au vu du numéro d'ordre précédent pour la machine, tel qu'indiqué sur la carte de poste et également mémorisé par le centre de rattachement à des fins de contrôle. Ce numéro d'ordre est suivi par une information d'index calculé en valeur absolue par le centre de rattachement 2 au vu des informations recueillies, cet index en valeur absolue s'étendant sur au moins un mot selon un processus analogue à celui déjà prévu pour les diverses informations à grand nombre de bits évoquées plus haut.

Après inscription d'un message d'acquittement la carte de poste 3P concernée est restituée par le terminal d'écriture-lecture 5 du centre de rattachement où elle a été traitée, elle doit alors être réintroduite dans la machine à affranchir qu'elle contrôle.

Comme déjà énoncé plus haut, il est possible d'ajouter des informations spécifiques de gestion à chaque passage des cartes de poste 3P par le centre de rattachement 2, pour modifier les directives données antérieurement ou pour en ajouter, la présente description n'étant bien entendue pas exhaustive sur ce sujet.

Au retour de la carte de poste 3P dans la machine à affranchir qu'elle contrôle, suite à une opération d'acquittement par le centre de rattachement 2, le processeur 18 de la machine prend en compte les informations écrites par ce centre dans la carte et compare notamment l'index en valeur absolue calculé par ce centre avec celui que lui-même a calculé. En cas de désaccord le processeur 18 inscrit en ses mémoires 19 et en mémoire 7 de carte un message composé d'une part des bits de système V = O, CM = O suivi d'un code d'opération caractéristique de désaccord et d'autre part d'une information composée par l'index en valeur absolue qu'il a lui-même calculé, cette information s'étendant sur au moins un mot et étant suivi d'un code correcteur d'erreur.

Suite à ce message les opérations d'écriture en mémoire 7 de carte de poste se poursuivent comme auparavant.

Lorsque la mémoire 7 est presque totalement écrite, ceci est signifié à l'utilisateur, via l'afficheur 17 de la machine à affranchir, qui reçoit l'information correspondante de son processeur 18 dûment informé par celui de la carte de poste.

Un renouvellement de carte de poste 3P doit alors être effectué sous peine d'arrêt de la machine dans les jours qui suivent à l'épuisement de la mémoire 7.

L'utilisateur remplace la carte de poste 3P usagée par insertion d'une carte de poste neuve dans le dispositif d'écriture-lecture 4 de sa machine à affranchir. La nouvelle carte de poste obtenue du centre de rattachement 2 comporte les informations de qualification et de définition des compteurs qui lui ont été fournies par ce centre. Après reconnaissance mutuelle de la machine à affranchir par la carte et de la carte par la machine qui attend une nouvelle carte, le processeur 18 de la machine entreprend l'envoi au processeur 6 de la carte d'une succession d'informations qu'il a lu sur la précédente carte et qu'il a mémorisé en zone sauvegardée des mémoires 19.

Cette succession d'informations comprend un message de contrôle daté contenant le code d'opération de changement de carte de poste, l'heure du changement correspondant à la mise en service de la nouvelle carte et au moins le code du centre de rattachement, elle comprend aussi tout ce qui était inscrit dans la carte à partir du dernier message d'acquittement inclus et jusqu'en fin de carte. Après inscription de ces données en mémoire 7 de la nouvelle carte de poste et éventuelle relecture par la machine à affranchir 1 avec affichage des données sur l'afficheur 17 de cette machine, celle-ci est alors apte à reprendre son fonctionnement normal.

Il n'est pas nécessaire de rapporter les cartes de poste usagées au centre de rattachement puisque les nouvelles comportent toutes les indications nécessaires à la saisie des données d'exploitation par le centre de rattachement et que la mise en service d'une nouvelle carte de poste permet de rendre caduque la précédente.

Si une carte de poste 3P est perdue ou détériorée, la machine à affranchir, à laquelle elle est affectée, est bloquée et il est nécessaire de mettre en oeuvre une nouvelle carte de poste sous le contrôle d'un technicien doté, d'une carte de maintenance 3T spécifique.

La carte de maintenance 3T est introduite dans le terminal d'écriture-lecture 4 de la machine à affranchir 1 concernée et une information significative de carte perdue est alors fabulée sur le clavier 16 de cette machine afin d'autoriser la prise en compte d'une nouvelle carte de poste 3P. Cette nouvelle carte de poste 3P est alors introduite dans le terminal d'écriture-lecture 4 à la place de la carte de maintenance 3T pour recevoir des informations sauvegardées en mémoires 19 de la machine à affranchir ; ces informations correspondent pratiquement à celles fournies à une carte au cours d'un renouvellement, auxquelles s'ajoute un message caractéristique d'une intervention de maintenance et un message caractéristique de perte.

## Revendications

1. Procédé de contrôle, par carte (3) à mémoire d'information, pour parc de machines à affranchir (1) placées sous la surveillance d'un centre de rattachement (2) chargé de la gestion comportant en ce but, comme chacune des machines (1), un terminal d'écriture-lecture (5) de carte (3) et une logique organisée autour d'au moins un processeur (18,24) et de mémoires (19,25), des transferts d'informations étant prévus entre centre (2) et machines (1) au moyen des cartes (3) que l'on vient alternativement placer dans des terminaux d'écriture-lecture (4,5) du centre et des machines, caractérisé en ce que les informations à transmettre, essentiellement composées de directives de régie de machine émanant du centre et de relevés d'exploitation en provenance d'une machine, sont échangées par l'intermédiaire de cartes individuellement affectées à chaque machine (1) pour ses échanges avec le centre de rattachement (2) et comportant chacune une mémoire (7) dans laquelle ces informations sont irréversiblement inscrites, et un microprocesseur (6) assurant la surveillance de la lecture de sa carte (3) et un contrôle sélectif des transferts d'information au moyen de la carte qui le contient et notamment des inscriptions en mémoire de carte, et en ce que la mémoire d'une telle carte contient une clé d'accès à la carte et un numéro d'identification machine spécifique, sous forme de données binaires dites d'autorisation, permettant au processeur (6) de la carte de n'autoriser les inscriptions à partir d'un terminal d'écriture et de lecture (4) de carte de machine à affranchir que si ce dernier fournit les dites données d'autorisation,
que des informations de fréquence de relevés de compteurs et des informations de définition des compteurs en nombre et plage sont inscrites en mémoire (7) de carte de poste (3P) par le centre de rattachement (2) préalablement à la mise en service de ladite carte de poste dans la machine à affranchir à laquelle elle est affectée, afin d'être transmise en mémoire (19) de cette machine pour mise en application lors de ladite mise en service, et
en ce que des cartes de gestion (3A, 3T) auxiliaires, dotées d'indications spécifiques d'usage sont mises en oeuvre pour la réalisation d'opérations exceptionnelles, telles la mise en service, le retrait ou le dépannage, lesdites cartes devant être individuellement introduites dans le terminal d'écriture-lecture de la machine à affranchir concernée, préalablement à la carte de poste de cette machine, pour permettre la réalisation de l'opération correspondante et l'inscription d'un message correspondant en mémoire (7) de la carte de poste (3P) concernée.

2. Procédé de contrôle selon la revendication 1, caractérisé en ce que les informations de définition de compteurs inscrites en mémoire (7) de carte de poste (3P) définissent le nombre et les plages des compteurs,dits statistiques, couvrant la plage d'affranchissement de la machine.

3. Procédé de contrôle selon la revendication 1, caractérisé en ce que le fonctionnement d'une machine à affranchir (1) est conditionné par la présence d'une carte de poste (3P) ou de clé (3C) en son terminal d'écriture-lecture (4).

4. Procédé de contrôle selon la revendication 1, caractérisé en ce que le terminal d'écriture-lecture (4) d'une machine à affranchir inscrit dans la carte de poste (3P) affectée à cette machine, chronologiquement, à la suite des informations de fréquence et de définition inscrites par le centre de rattachement, les différents relevés effectués sur les compteurs de la machine et en ce que le centre de rattachement inscrit périodiquement un message d'acquittement à la suite du dernier relevé effectué et après extraction de la carte (3P) considérée du terminal d'écriture-lecture (4) de la machine à affranchir et insertion pour lecture et acquittement dans un terminal d'écriture-lecture (5) du centre de rattachement.

5. Procédé de contrôle selon les revendications 2 et 3, caractérisé en ce que les informations de fréquence de relevé en mémoire (7) de carte de poste comportent une indication de comptage, apte à bloquer la machine à affranchir concernée en l'absence de message d'acquittement inscrit en mémoire (7) de carte en temps voulu par le centre de rattachement.

6. Procédé de contrôle selon la revendication 4, caractérisé en ce que le renouvellement d'une carte de poste (3P), dont la zone encore inscriptible de mémoire (7) s'épuise, s'effectue notamment à l'aide du terminal d'écriture-lecture (4) de la machine à affranchir (1) à laquelle cette carte de poste est affectée, ce terminal servant à enregistrer en mémoire (19) de ladite machine à affranchir les données contenues en zone inscriptible de mémoire (7) de la carte de poste (3P), depuis le dernier message d'acquittement inclus du centre de rattachement afin de les inscrire sur une nouvelle carte de poste, après reconnaissance mutuelle de la nouvelle carte par la machine et vice versa, le centre de rattachement ayant préalablement inscrit en mémoire (7) de cette nouvelle carte les informations de qualification et de définition des compteurs.

7. Procédé de contrôle selon la revendication 1, caractérisé en ce que le remplacement d'une carte de poste (3P) perdue ou détériorée, s'effectue notamment à l'aide d'une part du terminal d'écriture-lecture (4) de la machine à affranchir (1) à laquelle ladite carte est affectée et d'autre part d'une carte de gestion auxiliaire, telle une carte de maintenance (3T), introduite préalablement à une nouvelle carte de poste prévue en remplacement, la lecture par le terminal de ladite carte de gestion auxiliaire associée à la réception d'une information spécifique, fabulée sur un clavier (16) de la machine à affranchir, permettant la mise en service de la nouvelle carte de poste.

## Claims

1. Method for controlling by information memory cards (3) a set of franking machines (1) which are placed under the monitoring of a control centre (2) in charge of the management, comprising to this end, as does each of the franking machines (1), a card (3) read/write terminal (5) and a logic circuit organized around at least one processor (18, 24) and memories (19, 25), with information transfers being provided between the centre (2) and the machines (1) by means of the cards (3) which are placed alternately in the read/write terminals (4, 5) of the centre and of the machines, characterized in that information to be transferred and being composed essentially of machine operating instructions issuing from the centre and of operating statements provided by a machine, are exchanged via cards which are each individually attributed to one of the machines (1) for use in its exchanges with the control centre (2), and each comprising a memory (7), in which said information is irreversibly written, and a microprocessor (6) ensuring the monitoring of the reading of its card (3) and a selective control of the information transfers by means of the associated card and notably of the writings into the card memory, and in that the memory of such a card contains a specific key for accessing the card and a specific machine identification number in the form of so-called binary authorizing data, that enable the processor (6) of the card to authorize the writing from a card read/write terminal (4) of the franking machine only if the latter provides said authorizing data, in that data concerning meter reading frequency and the definition of the number and the ranges of meters are written in the memory (7) of a "postage" card (3P) by the control centre (2) prior to said postage card being put into operation in the franking machine to which it is attributed in order to ensure the transfer into the memory (19) of said machine for being applied when putting the machine into operation and in that auxiliary management cards (3A, 3T), which are provided with special usage indications, are put into action for executing special operations such as putting into service, withdrawal or repair, said cards requiring to be individually inserted into the read/write terminal of the concerned franking machine prior to the postage card of said machine, in order to allow the realization of the corresponding operation and the writing of a corresponding message in the memory (7) of the concerned postage card (3P).

2. Control method according to claim 1, characterized in that the meter-defining data written into the memory (7) of a postage card (3P) defines the number and the ranges of "statistical" counters which cover the franking range of said machine.

3. Control method according to claim 1, characterized in that the operation of a franking machine (1) is conditioned by the presence of a postage card (3P) or of a key card (3C) in its read/write terminal (4).

4. Control method according to claim 1, characterized in that the read/write terminal (4) of a franking machine writes into the postage card (3P) attributed to said machine chronologically and after the information relating to frequency and definition written by the control centre, the different readings on the counters of the machine, and in that the centre writes periodically a receipt message after the last reading and after extraction of the considered card (3P) from the read/write terminal (4) of the franking machine and insertion for reading and acknowledgment in a read/write terminal (5) of the control centre.

5. Control method according to claims 2 and 3, characterized in that the information relating to the frequency of reading in the memory (7) of the postage card comprises a count indication capable of locking the concerned franking machine in the absence of a timely receipt message in the memory (7) of the card by the liaison centre.

6. Control method according to claim 4, characterized in that the renewal of a postage card (3P), whose remaining writable zone of the memory (7) approaches exhaustion, is in particular made by means of the read/write terminal (4) of the franking machine (1), to which said card is attributed, said terminal serving to register in the memory (19) of said franking machine the data contained in the writable zone of the memory (7) of the postage card (3P) since the last message of receipt included of the control centre, so as to write them on a new postage card, subsequent to a mutual recognition of the new card by the machine, and vice versa, with the control centre having written previously in the memory (7) of said new card the information relating to the qualification and definition of the counters.

7. Control method according to claim 1, characterized in that the replacement of a postage card (3P) lost or degraded is in particular made by means of the read/write terminal (4) of the franking machine (1), to said card is attributed, and on the other hand, of an auxiliary management card, such as a maintenance card (3T), inserted prior to the new postage card provided for replacement, with the reading by the terminal of said auxiliary management card associated with the reception of a specific information input on a keyboard (16) of the franking machine allowing for the putting into service of the new postage card.

## Patentansprüche

1. Steuerverfahren mittels Informationsspeicherkarten (3) für eine Gruppe von Frankiermaschinen (1) die unter der Überwachung einer mit der Verwaltung beauftragten Verbindungszentrale (2) stehen, die zu diesem Zweck, wie jede Maschine (1), ein Gerät (5) zum Schreiben und Lesen der Karte (3) und eine mindestens einen Prozessor (18, 24) enthaltende Logik sowie Speicher (19, 25) aufweist, wobei Informationsübertragungen zwischen der Zentrale (2) und den Maschinen (1) durch die Karten (3) vorgesehen sind, die man abwechselnd in die Schreib-Lesegeräte (4, 5) der Zentrale und der Maschinen eingibt, dadurch gekennzeichnet, daß die zu übertragenden Informationen, die im wesentlichen aus Maschinenbetriebsanweisungen, die von der Zentrale ausgegeben werden, und aus Benutzungsablesungen bestehen, die von einer Maschine kommen, durch Karten ausgetauscht werden, die jeder Maschine (1) individuell für ihren Informationsaustausch mit der Verbindungszentrale (2) zugewiesen sind und je einen Speicher (7) aufweisen, in den diese Informationen irreversibel eingeschrieben werden, und wobei ein Mikroprozessor (6) die Überwachung der Ablesung seiner Karte (3) und eine selektive Kontrolle der Informationsübertragungen über die Karte, insbesondere der Einträge in den Kartenspeicher durchführt, und daß der Speicher einer solchen Karte einen Zugangsschlüssel zur Karte und eine spezifische Maschinenidentifikationsnummer in Form binärer Autorisierungsdaten enthält, die es dem Prozessor (6) der Karte ermöglichen, die Einträge durch ein Schreib- und Lesegerät (4) auf der Frankiermaschinenkarte nur dann zu genehmigen, wenn letztere die erwähnten Autorisierungsdaten liefert,
daß vor der Inbetriebnahme der Gebührenkarte in der Frankiermaschine, der sie zugewiesen ist, Informationen über die Häufigkeit der Zählerablesungen und Definitionsinformationen über Anzahl und Kapazität der Zähler in den Speicher (7) der Gebührenkarte (3B) durch die Verbindungszentrale (2) eingeschrieben werden, um während der Inbetriebnahme der Maschine in den Speicher (19) dieser Maschine übertragen zu werden , und daß Hilfsverwaltungskarten (3A, 3T), die mit spezifischen Gebrauchsangaben versehen sind, zur Durchführung außergewöhnlicher Operationen wie etwa bei der Inbetriebnahme, dem Einzug oder der Reparatur eingesetzt werden, wobei die Karten vor der Gebührenkarte der Maschine einzeln in das Schreib-Lesegerät der betreffenden Frankiermaschine eingegeben werden müssen, um die Durchführung der entsprechenden Operation und das Einschreiben einer entsprechenden Meldung in den Speicher (7) der betreffenden Gebührenkarte (3P) zu ermöglichen.

2. Steuerverfahren nach Anspruch 1, dadurch gekennzeichnet, daß die in den Speicher (7) der Gebührenkarte (3B) eingeschriebenen Zählerdefinitionsinformationen die Anzahl und die Bereiche der sogenannten Statistikzähler definieren, die den Frankierbereich der Maschine überdecken.

3. Steuerverfahren nach Anspruch 1, dadurch gekennzeichnet, daß der Betrieb einer Frankiermaschine (1) vom Vorhandensein einer Gebührenkarte (3P) oder einer Schlüsselkarte (3C) in ihrem Schreib-Lesegerät (4) abhängt.

4. Steuerverfahren nach Anspruch 1, dadurch gekennzeichnet, daß das Schreib-Lesegerät (4) einer Frankiermaschine chronologisch in die dieser Maschine zugeordnete Gebührenkarte (3P) hinter die von der Verbindungszentrale eingeschriebenen Häufigkeits- und Definitionsinformationen die verschiedenen an den Zählern der Maschine erfolgten Ablesungen einschreibt und daß die Verbindungszentrale periodisch hinter die erfolgte letzte Ablesung und nach Entnahme der fraglichen Karte (3P) aus dem Schreib-Lesegerät (4) der Frankiermaschine und nach Eingabe in ein Schreib-Lesegerät der Verbindungszentrale zum Lesen und Abbuchen eine Bestätigungsmeldung einschreibt.

5. Steuerverfahren nach den Ansprüchen 2 und 3, dadurch gekennzeichnet, daß die im Speicher (7) der Gebührenkarte enthaltenen Informationen über die Ablesungshäufigkeit eine Zählstandsangabe aufweisen, die die betreffende Frankiermaschine bei Fehlen einer rechtzeitig von der Verbindungszentrale in den Speicher (7) der Karte eingeschriebenen Bestätigungsmeldung blockieren kann.

6. Steuerverfahren nach Anspruch 4,dadurch gekennzeichnet, daß die Erneuerung einer Gebührenkarte (3P), deren noch beschreibbare Zone des Speichers (7) zu Ende geht, insbesondere mit Hilfe des Schreib-Lesegeräts (4) der Frankiermaschine (1) erfolgt, der die betreffende Gebührenkarte zugewiesen ist, wobei dieses Gerät zum Einschreiben der seit der letzten einbezogenen Bestätigungsmeldung der Verbindungszentrale in der beschreibbaren Zone des Speichers (7) der Gebührenkarte (3P) enthaltenen Daten in den Speicher (19) der betreffenden Frankiermaschine dient, um diese Daten nach gegenseitiger Anerkennung einer neuen Karte durch die Maschine, und umgekehrt, in die neue Gebührenkarte zu schreiben, wobei die Verbindungszentrale zuvor die Qualifikations- und Definitionsinformationen der Zähler in den Speicher (7) der neuen Karte eingeschrieben hat.

7. Steuerverfahren nach Anspruch 1, dadurch gekennzeichnet, daß der Ersatz einer verlorengegangenen oder beschädigten Gebührenkarte (3P) insbesondere mit Hilfe des Schreib-Lesegeräts (4) der Frankiermaschine (1), der die genannte Karte zugewiesen ist, einerseits, und einer Hilfsverwaltungskarte wie etwa einer Wartungskarte (3T) andererseits erfolgt, die vor einer neuen als Ersatz vorgesehenen Gebührenkarte eingegeben wird, wobei das Lesen der Hilfsverwaltungskarte durch das Gerät in Verbindung mit dem Empfang einer auf einer Tastatur (16) der Frankiermaschine eingegebenen spezifischen Information die Inbetriebnahme der neuen Gebührenkarte ermöglicht.
